# EUROPEAN PATENT SPECIFICATION

(11) **EP 3 320 277 B1**
(45) Date of publication and mention of the grant of the patent: **08.11.2023**
(21) Application number: 16757992.9
(22) Date of filing: 07.07.2016
(51) Int. Cl.: F25D 29/00, F25B 41/345, F25B 5/02

(54) **MULTI-COMPARTMENT TRANSPORT REFRIGERATION SYSTEM WITH ECONOMIZER**
MEHRKAMMERTRANSPORTKÜHLSYSTEM MIT STROMSPARVORRICHTUNG
SYSTÈME FRIGORIFIQUE DE TRANSPORT MULTI-COMPARTIMENTS À ÉCONOMISEUR

(30) Priority: 08.07.2015 US 201514794339
(43) Date of publication of application: 16.05.2018
(73) Proprietor: Carrier Corporation, Farmington, Connecticut 06032 (US)
(72) Inventor: SENF, JR., Raymond L., East Syracuse, New York 13057 (US); STOCKBRIDGE, Michael, East Syracuse, New York 13057 (US)
(74) Representative: Dehns
(86) International application number: PCT/US2016/041245
(87) International publication number: WO 2017/007877

(56) References cited:
- WO-A1-2014/120332
- WO-A1-2014/209780
- WO-A2-2012/037223

## Description

### BACKGROUND

The present invention relates to transport refrigeration systems, and more particularly to multi-compartment transport refrigeration systems using an economizer.

The refrigerated container of a truck trailer requires a refrigeration unit for maintaining a desired temperature environment within the interior volume of the container. A wide variety of products, ranging for example, from freshly picked produce to deep frozen seafood, are commonly shipped in refrigerated truck trailers and other refrigerated freight containers. To facilitate shipment of a variety of products under different temperature conditions, some truck trailer containers are compartmentalized into two or more separate compartments each of which will typically have a door that opens directly to the exterior of the trailer. The container may be compartmentalized into a pair of side-by-side axially extending compartments, or into two or more back-to-back compartments, or a combination thereof.

Conventional transport refrigeration units used in connection with compartmentalized refrigerated containers of truck trailers include a refrigerant compressor, a condenser, a main evaporator and one or more remote evaporators connected via appropriate refrigerant lines in a closed refrigerant flow circuit. The refrigeration unit must have sufficient refrigeration capacity to maintain the perishable product stored within the various compartments of the container at the particular desired compartment temperatures over a wide range of outdoor ambient temperatures and load conditions.

In addition to the afore-mentioned main evaporator, one or more remote evaporators, typically one for each additional compartment aft of the forward most compartment, are provided to refrigerate the air or other gases within each of the separate aft compartments. The remote evaporators may be mounted to the ceiling of the respective compartments or mounted to one of the partition walls of the compartment, as desired. The remote evaporators are generally disposed in the refrigerant circulation circuit in parallel with the main evaporator. Typically, a solenoid operated shut off valve is disposed in the refrigerant circulation circuit upstream of each of the remote evaporators in operation with a system controller so that each remote evaporator may be independently and selectively open and closed to refrigerant flow in response to the cooling demand of the respective compartment with which the respective remote evaporator is operatively associated. The same effect can be accomplished with independent stepper type control valves (rather than solenoid operated shut off valves) at the inlet of each evaporator coil.

Multiple temperature compartment transport refrigeration systems create significant control and refrigeration system complexity. Emissions requirements for cleaner diesel technology and/or engine power levels require a new approach to refrigeration cycle efficiency and power management. Typically, multiple temperature control of compartments is achieved by a pulse width modulation of an evaporator expansion valve of one or more perishable compartments, while an evaporator expansion valve for a frozen compartment is operating in full cool operation. This specific pulse width modulation control on a single stage compression system creates a dynamic power disruption from a rapid rise in suction pressure at the compressor due to the fact the saturated evaporation temperatures of all compartments are shared with common suction plenum.

WO 2014/209780 disclose an exemplary, prior art multi-compartment transport refrigeration system, having the features of the preamble of claim 1.

### BRIEF DESCRIPTION

A transport refrigeration system of the present invention comprises the features of appended claim 1.

These and other advantages and features will become more apparent from the following description taken in conjunction with the drawings.

### BRIEF DESCRIPTION OF THE DRAWINGS

The foregoing and other features, and advantages of the invention are apparent from the following detailed description taken in conjunction with the accompanying drawings in which:
FIG. 1 is a perspective view, partly in section, of a refrigerated truck trailer having a compartmentalized container and equipped with a transport refrigeration unit having multiple evaporators;
FIG. 2 is a schematic representation of a multiple evaporator transport refrigeration unit in an exemplary embodiment of the invention.
FIG. 3 is a flowchart of a method for controlling the multi-compartment refrigeration system; and
FIG. 4 is a flowchart of a method for controlling the multi-compartment refrigeration system.

### DETAILED DESCRIPTION OF THE INVENTION

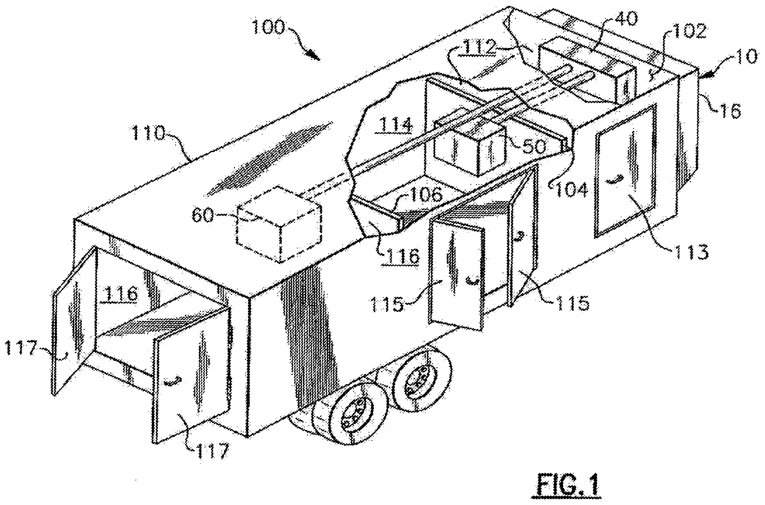

Referring now to FIG. 1, there is shown a truck trailer 100 having a refrigerated container 110 subdivided, i.e., compartmentalized, by internal partition walls 104, 106 into a forward cargo compartment 112, a central cargo compartment 114 and an aft cargo compartment 116. The cargo compartments 112, 114 and 116 have access doors 113, 115 and 117, respectively, which open directly to the exterior of the truck trailer to facilitate loading of product into the respective cargo compartments 112, 114 and 116. The container 100 is equipped with a transport refrigeration system 10 for regulating and maintaining within each of the respective cargo compartments 112, 114 and 116 a desired storage temperature range selected for the product being shipped therein. Although embodiments will be described herein with reference to the three compartment, refrigerated container, illustrated in FIG. 1, it is to be understood that embodiments may also be used in connection with truck trailers having compartmentalized containers with the cargo compartments arranged otherwise, and also in connection with other refrigerated transport vessels, including for example refrigerated container of a truck, or a refrigerated freight container of compartmentalized design for transporting perishable product by ship, rail and/or road transport.

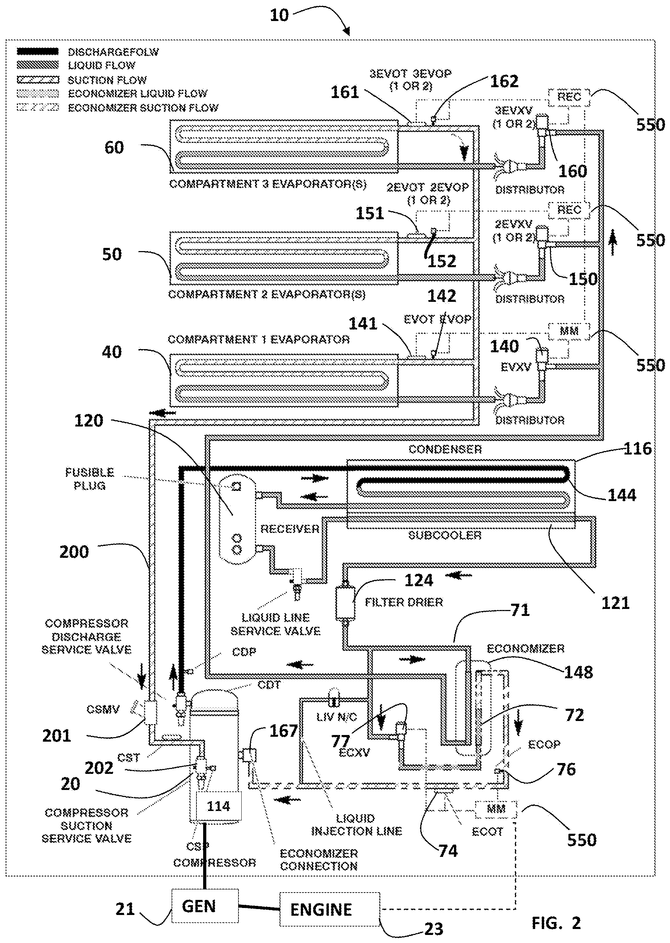

Transport refrigeration system 10 includes a main evaporator 40 and remote evaporators 50 and 60. Each of the evaporators 40, 50 and 60 may comprise a conventional finned tube coil heat exchanger. The transport refrigeration system 10 is mounted as in conventional practice to an exterior wall of the truck trailer 100, for example the front wall 102 thereof, with the compressor 20 and the heat rejecting heat exchanger 116 (FIG. 2) disposed externally of the refrigerated container 110 in a housing 16.

FIG. 2 is a schematic representation of the multiple evaporator transport refrigeration unit 10 in an exemplary embodiment. In the depicted embodiment, compressor 20 is a scroll compressor, however other compressors such as reciprocating or screw compressors are possible without limiting the scope of the disclosure. Compressor 20 includes a motor 114 which may be an integrated electric drive motor driven by a synchronous generator 21 operating at low speed (for example, 45 Hz) or high speed (for example, 65 Hz). Generator 21 may be driven by a diesel engine 23 of a vehicle that tows truck trailer 100. Alternatively, generator 21 may be driven by a stand-alone engine 23. In an exemplary embodiment, engine 23 a diesel engine, such as a four cylinder, 2200 cc displacement diesel engine which operates at a high speed (about 1950 RPM) or at low speed (about 1350 RPM).

High temperature, high pressure refrigerant vapor exits a discharge port of the compressor 20 then moves to a heat rejecting heat exchanger 116 (e.g., condenser or gas cooler), which includes a plurality of condenser coil fins and tubes 144, which receive air, typically blown by a heat rejecting heat exchanger fan (not shown). By removing latent heat through this step, the refrigerant condenses to a high pressure/high temperature liquid and flows to the receiver 120 that provides storage for excess liquid refrigerant during low temperature operation. From the receiver 120, the refrigerant flows to a subcooler 121, which increases the refrigerant subcooling. Subcooler 121 may be positioned adjacent heat rejecting heat exchanger 116, and cooled by air flow from the heat rejecting heat exchanger fan. A filter-drier 124 keeps the refrigerant clean and dry, and outlets refrigerant to a first refrigerant flow path 71 of an economizer heat exchanger 148, which increases the refrigerant subcooling. Economizer heat exchanger 148 may be a plate-type heat exchanger, providing refrigerant to refrigerant heat exchange between a first refrigerant flow path 71 and second refrigerant flow path 72.

From the first refrigerant flow path 71, refrigerant flows from the economizer heat exchanger 148 to a plurality of evaporator expansion devices 140, 150 and 160, connected in parallel with the first refrigerant flow path 71. Evaporator expansion devices 140, 150 and 160 are associated with evaporators 40, 50 and 60, respectively, to control ingress of refrigerant to the respective evaporators 40, 50 and 60. The evaporator expansion devices 140, 150 and 160 are electronic evaporator expansion devices controlled by a controller 550. Controller 550 is shown as distributed for ease of illustration. It is understood that controller 550 may be a single device that controls the evaporator expansion devices 140, 150 and 160. Evaporator expansion device 140 is controlled by controller 550 in response to signals from a first evaporator outlet temperature sensor 141 and first evaporator outlet pressure sensor 142. Evaporator expansion device 150 is controlled by controller 550 in response to signals from a second evaporator outlet temperature sensor 151 and second evaporator outlet pressure sensor 152. Evaporator expansion device 160 is controlled by controller 550 in response to signals from a third evaporator outlet temperature sensor 161 and third evaporator outlet pressure sensor 162. Evaporator fans (not shown) draw or push air over the evaporators 40, 50 and 60 to condition the air in compartments 112, 114, and 116, respectively.

Refrigerant vapor from evaporators 40, 50 and 60 is coupled to a common compressor inlet path 200 coupled to a compressor suction port through a compressor suction modulation valve 201 and compressor suction service valve 202.

Refrigeration system 10 further includes a second refrigerant flow path 72 through the economizer heat exchanger 148. The second refrigerant flow path 72 is connected between the first refrigerant flow path 71 and an intermediate inlet port 167 of the compressor 20. The intermediate inlet port 167 is located at an intermediate location along a compression path between compressor suction port and compressor discharge port. An economizer expansion device 77 is positioned in the second refrigerant flow path 72, upstream of the economizer heat exchanger 148. The economizer expansion device 77 is an electronic economizer expansion device controlled by controller 550. When the economizer is active, controller 550 controls economizer expansion device 77 to allow refrigerant to pass through the second refrigerant flow path 72, through economizer heat exchanger 148 and to the intermediate inlet port 167. The economizer expansion device 77 serves to expand and cool the refrigerant, which proceeds into the economizer counter-flow heat exchanger 148, thereby sub-cooling the liquid refrigerant in the first refrigerant flow path 71 proceeding to evaporator expansion devices 140, 150 and 160.

As described in further detail herein, many of the points in the refrigerant vapor compression system 10 are monitored and controlled by a controller 550. Controller 550 may include a microprocessor and its associated memory. The memory of controller can contain operator or owner preselected, desired values for various operating parameters within the system 10 including, but not limited to, temperature set points for various locations within the system 10 or the container, pressure limits, current limits, engine speed limits, and any variety of other desired operating parameters or limits with the system 10. In an embodiment, controller 550 includes a microprocessor board that contains microprocessor and memory, an input/output (I/O) board, which contains an analog to digital converter which receives temperature inputs and pressure inputs from various points in the system, AC current inputs, DC current inputs, voltage inputs and humidity level inputs. In addition, I/O board includes drive circuits or field effect transistors ("FETs") and relays which receive signals or current from the controller 550 and in turn control various external or peripheral devices in the system 10, such as economizer expansion valve 77, for example.

A number of refrigeration system loading events may cause the compressor power to exceed compressor power limits. For example, when evaporator expansion devices 140, 150 and/or 160 are pulsed, this can create a dynamic power disruption from a rapid rise in suction pressure at compressor 20 due to the fact the saturated evaporation temperatures of all compartments are shared with common suction plenum coupled to common compressor inlet path 200. The pulses applied to evaporator expansion devices 140, 150 and/or 160 may be pulse width modulation signals or may correspond to pulsing the evaporator expansion devices 140, 150 and/or 160 from an on state to off state, and vice versa. The disruptions (e.g., a spike in volume of refrigerant at the suction port of compressor 20) can cause the compressor to compensate and exceed compressor power limits. Other refrigeration system loading events include heater(s) and/or fan(s) cycling on and off within one or more compartments 112, 114 and 116. Embodiments use the economizer expansion valve 77 to maintain compressor power levels below a prescribed power limit by varying the injection gas flow rate from the second refrigerant flow path 72 to the intermediate inlet port 167 to maintain a given engine power level.

In operation, controller 550 monitors superheat of the economizer heat exchanger 148 through an economizer heat exchanger outlet temperature sensor 74 and economizer heat exchanger outlet pressure sensor 76. A refrigeration system loading event, such as instantaneous pulses at evaporator expansion devices 140, 150 and/or 160 may cause a suction pressure rise at the suction port of compressor 20. This results in an increase in middle stage pressure at intermediate inlet port 167. This increases the pressure at economizer heat exchanger outlet pressure sensor 76, which is observed by controller 550 as reduced superheat. Controller 550 responds by reducing flow through or closing the economizer expansion valve 77 to maintain superheat of the economizer heat exchanger 148 at a desired level.

Controller 550 may also monitor speed and/or load on engine 23 and control the economizer expansion valve 77 in response to engine operating parameters, such as engine speed and/or engine load. The engine operating parameters may be sensed by sensors mounted at engine 23, in communication with controller 550. For example, controller 550 may detect that the engine 23 has dropped in RPM, indicating a step load on the compressor 20 due to one or more of refrigeration system loading events. In such a case, controller 550 may close or reduce flow through economizer expansion valve 77 to reduce the volume of refrigerant being supplied to compressor 20. Using operating parameters of engine 23 to control economizer expansion valve 77 may be performed alone, or in combination with the superheat control described herein.

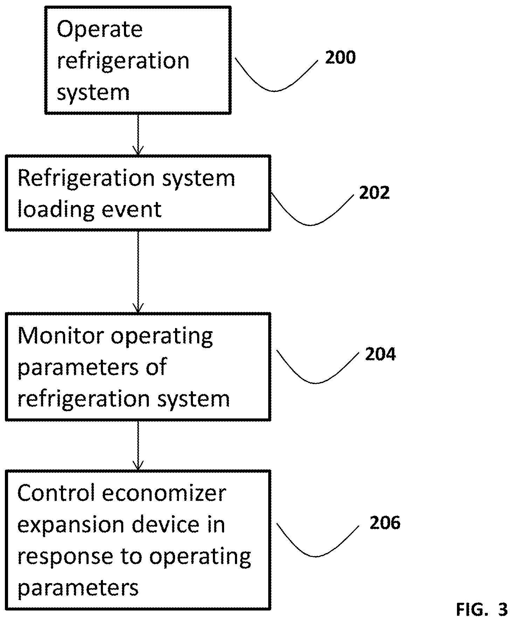

FIG. 3 is a flowchart of a method for controlling the multi-compartment refrigeration system. The process begins at 200 where the refrigeration system is operated to control temperature in the multiple compartments. At 202, a refrigeration system loading event occurs, such as one or more of the evaporator expansion devices 140, 150 and 160 being pulsed to control flow through the evaporator expansion device(s), heater(s) and/or fan(s) cycling on and off, etc. At 204, controller 550 monitors operating parameters of the refrigeration system. The operating parameters may include superheat at the outlet of the economizer heat exchanger 148 and/or operating parameters (e.g., speed and/or load) of engine 23. At 206, controller 550 controls that economizer expansion device 77 to adjust the flow of refrigerant to the intermediate inlet port 167 of compressor 20.

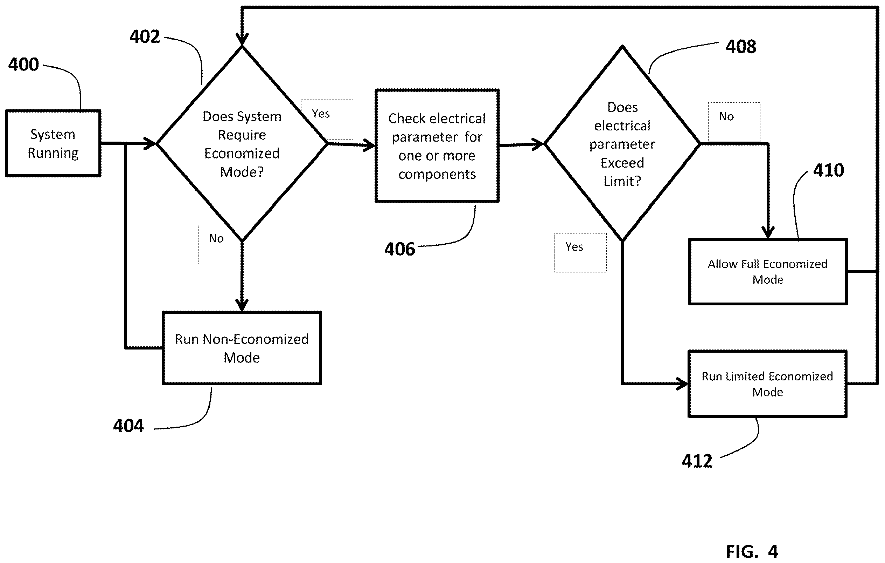

FIG. 4 is a flowchart of a method for controlling the multi-compartment refrigeration system. In the method of FIG. 4, the controller 550 monitors one or more electrical parameters of the system in order to control the economizer expansion device 77. The one or more electrical parameters of the transport refrigeration system 10 includes one or more of output current of the generator 21, output voltage of the generator 21, current draw of the compressor 20, input voltage at the compressor 20, current draw of one or more heat rejecting heat exchanger fans, input voltage at one or more heat rejecting heat exchanger fans, current draw of one or more evaporator fans, input voltage at one or more evaporator fans, current draw of one or more heaters (e.g., defrost coils) and input voltage at one or more heaters.

As shown in FIG. 4, the process begins at 400 with the transport refrigeration system 10 running in a non-economized mode. At 402, controller 550 determines whether the transport refrigeration system 10 requires operation in an economized mode. If not, flow proceeds to 404 where the transport refrigeration system 10 continues operating in a non-economized mode. If at 402, economized mode of operation is required, flow proceeds to 406 where an electrical parameter of one or more components is measured by controller 550 using respective current and/or voltage sensors installed at various components to be monitored. At 408, the controller 550 determines if the one or more electrical parameters exceeds a limit. The limit is a current or voltage threshold for a component of the transport refrigeration system 10. Block 408 may include detecting that a single electrical parameter exceeds a limit or multiple electrical parameters exceed respective limits. If at 408, no electrical limit(s) are exceeded, then flow proceeds to 410 where the transport refrigeration system 10 may be operated in a full economized mode. Operating in full economized mode refers to operating the economizer expansion device 77 with no restrictions (e.g., a full opening and closing range of the economizer expansion device 77). If at 408 one or more electrical limit(s) are exceeded, then flow proceeds to 412 where the transport refrigeration system 10 may be operated in a limited economized mode (e.g., a restricted opening and closing range of the economizer expansion device 77). Operating in limited economized mode refers to operating the economizer expansion device 77 with restrictions such that the one or more electrical parameters does not exceed a limit.

One example of the operation of the transport refrigeration system 10 using the process of FIG. 4 includes monitoring current draw at compressor 20. Modern generators 21 may be capable of providing excessive current to compressor 20. If during economizer mode, the current draw at compressor 20 exceeds a limit, then the economizer expansion device 77 can be controlled (e.g., incrementally closed) to reduce refrigerant flow to the intermediate inlet port 167 to reduce current consumption by the compressor 20.

FIG. 4 discloses a control method that may be used with multiple cargo compartments 112, 114 and 116 each having a respective evaporator 40, 50 and 60. In alternate embodiments, control of the economizer expansion device 77 based on one or more electrical parameters may be employed in a transport refrigeration system 10 having a single cargo compartment and a single evaporator. Thus, control of the economizer expansion device 77 based on one or more electrical parameters is not limited to transport refrigeration systems having multiple cargo compartments, but may be applied to a single compartment.

Using the economizer expansion valve 77 to control compressor power has numerous advantages. Control of the economizer expansion valve 77 is much faster acting than typical suction throttling regimes for single stage compressor systems. A typical reaction time for a compressor suction modulation valve 201 is 30-45 seconds from open to close. A typical reaction time for an economizer expansion device 77 (e.g., an electronically controlled stepper valve) is 6 seconds from open to close. Additionally, the refrigerant volume and mass in the economizer heat exchanger 148 is small, which tends to further increase reaction time and control by limiting stored refrigerant and subsequent energy.

Another benefit of the economized multi-temperature system is it allows for greater capacity from reduced pressure drop within the compartments and connecting tubing. Economized cycle capacity is driven by enthalpy and mass flow rate. To achieve the similar deep frozen capacity as a single stage system, enthalpy is increased in absence of mass flow rate. Typical mass flow rates of the economized scroll systems are 35-50% lower than single stage systems for same net capacity. Lower mass flow rate systems, such as that of FIG. 2, suffer less pressure drop effects from remote evaporator and line set losses. In addition, the economized cycle allows for smaller nominal low side piping diameter (e.g., 1 1/8" vs. 7/8") throughout the length (e.g., 53') of the trailer offering a significant installed cost savings.

Another benefit of the economized multi-temperature system is that it allows for variable sub-cooling to remote evaporators in times of need. When distributing subcooled refrigerant through multi-temperature compartments, it is helpful to maintain a net positive sub-cooling to the remote evaporators to prevent pre-expansion before expansion device. At certain times, refrigerant sub-cooling can be altered from heat gain through the individual compartments in which the refrigerant is passed through. By allowing for very light partial flow through the economizer system at low loads or high power demands, the system maintains a positive sub-cooling environment to the remote evaporator expansion valves, thereby improving performance.

While the invention has been described in detail in connection with only a limited number of embodiments, it should be readily understood that the invention is not to be seen as limited by the foregoing description, but is only limited by the scope of the appended claims.

## Claims

1. A transport refrigeration system (10) comprising:
a compressor (20) having a suction port, a discharge port and an intermediate inlet port located at an intermediate location along a compression path between the compressor suction port and the compressor discharge port;
a heat rejecting heat exchanger (116) downstream of the compressor discharge port and including a heat rejecting heat exchanger fan;
an economizer heat exchanger (148) having a first refrigerant flow path (71) and a second refrigerant flow path (72) therethrough;
an evaporator expansion device (140) downstream of the first refrigerant flow path (71);
an evaporator (40) including an evaporator fan and having an inlet coupled to the evaporator expansion device (140) and an outlet coupled to a compressor inlet path, the compressor inlet path coupled to the compressor suction port, the evaporator for cooling a compartment (112) of a container;
an economizer expansion device (77) coupled to the first refrigerant flow path (71), the economizer expansion device (77) directing refrigerant from the first refrigerant flow path (71) to the second refrigerant flow path (72), the second refrigerant flow path (72) coupled to the intermediate inlet port;
a generator (21);
a heater; and
a controller (550) configured to control the economizer expansion device (77) to regulate flow of refrigerant along the second refrigerant flow path (72) to the intermediate inlet port,
**characterized in that** the controller (550) is configured to control the economizer expansion device (77) in response to an electrical parameter of the refrigeration system (10);
wherein the electrical parameter of the refrigeration system (10) includes one or more of output current of the generator, output voltage of the generator, current draw of the compressor, input voltage at the compressor, current draw of the heat rejecting heat exchanger fan, input voltage at the heat rejecting heat exchanger fan, current draw of the evaporator fan, input voltage at the evaporator fan, current draw of the heater and input voltage at the heater,
wherein the transport refrigeration system (10) includes a voltage and/or current sensor configured to measure the electrical parameter, and
wherein:
control of the economizer expansion device (77) in response to the electrical parameter of the refrigeration system includes:
measuring the electrical parameter using the voltage and/or current sensor;
comparing the electrical parameter to a limit;
operating the economizer expansion device (77) in a full economized mode when the electrical parameter does not exceed the limit, wherein the full economized mode includes operating a full opening and closing range of the economizer expansion device; and
operating the economizer expansion device (77) in a limited economized mode when the electrical parameter does exceed the limit, wherein the limited economized mode includes restricting an opening and closing range of the economizer expansion device (77).

2. The transport refrigeration system (10) of any preceding claim further comprising:
a second evaporator expansion device (150) downstream of the first refrigerant flow path (71);
a second evaporator (50) having an inlet coupled to the second evaporator expansion device (150) and an outlet coupled to the compressor inlet path, the second evaporator (50) for cooling a second compartment (114) of the container;

## Patentansprüche

1. Transportkältesystem (10), das Folgendes umfasst:
einen Verdichter (20), der einen Ansauganschluss, einen Austrittsanschluss und einen Zwischeneinlassanschluss, der sich an einer Zwischenstelle entlang eines Verdichtungspfads zwischen dem Verdichteransauganschluss und dem Verdichteraustrittsanschluss befindet, aufweist;
einen Wärmeabweisungswärmetauscher (116) stromabwärts des Verdichteraustrittsanschlusses und beinhaltend ein Wärmeabweisungswärmetauschergebläse;
einen Vorwärmer-Wärmetauscher (148), der einen ersten Kältemittelflusspfad (71) und einen zweiten Kältemittelflusspfad (72) durch sich hindurch aufweist;
eine Verdampfer-Expansionsvorrichtung (140) stromabwärts des ersten Kältemittelflusspfads (71);
einen Verdampfer (40), der ein Verdampfergebläse beinhaltet und einen Einlass, der an die Verdampfer-Expansionsvorrichtung (140) gekoppelt ist, und einen Auslass, der an einen Verdichtereinlasspfad gekoppelt ist, aufweist, wobei der Verdichtereinlasspfad an den Verdichteransauganschluss gekoppelt ist, wobei der Verdampfer zum Kühlen einer Kammer (112) eines Behälters ist;
eine Vorwärmer-Expansionsvorrichtung (77), die an den ersten Kältemittelflusspfad (71) gekoppelt ist, wobei die Vorwärmer-Expansionsvorrichtung (77) Kältemittel von dem ersten Kältemittelflusspfad (71) zu dem zweiten Kältemittelflusspfad (72) leitet, wobei der zweite Kältemittelflusspfad (72) an den Zwischeneinlassanschluss gekoppelt ist;
einen Generator (21);
eine Heizung; und
eine Steuerung (550), die dazu konfiguriert ist, die Vorwärmer-Expansionsvorrichtung (77) zu steuern, einen Kältemittelfluss entlang des zweiten Kältemittelflusspfads (72) zu dem Zwischeneinlassanschluss zu regulieren,
**dadurch gekennzeichnet, dass** die Steuerung (550) dazu konfiguriert ist, die Vorwärmer-Expansionsvorrichtung (77) als Reaktion auf einen elektrischen Parameter des Kältesystems (10) zu steuern;
wobei der elektrische Parameter des Kältesystems (10) einen oder mehrere von Ausgangsstrom des Generators, Ausgangsspannung des Generators, Stromaufnahme des Verdichters, Eingangsspannung an dem Verdichter, Stromaufnahme des Wärmeabweisungswärmetauschergebläses, Eingangsspannung an dem Wärmeabweisungswärmetauschergebläse, Stromaufnahme des Verdampfergebläses, Eingangsspannung an dem Verdampfergebläse, Stromaufnahme der Heizung und Eingangsspannung an der Heizung beinhaltet,
wobei das Transportkältesystem (10) einen Spannungs- und/oder Stromsensor beinhaltet, der dazu konfiguriert ist, den elektrischen Parameter zu messen, und
wobei:
Steuern der Vorwärmer-Expansionsvorrichtung (77) als Reaktion auf den elektrischen Parameter des Kältesystems Folgendes beinhaltet:
Messen des elektrischen Parameters unter Verwendung des Spannungs- und/oder Stromsensors;
Vergleichen des elektrischen Parameters mit einem Grenzwert;
Betreiben der Vorwärmer-Expansionsvorrichtung (77) in einem Modus zum vollständigen Vorwärmen, wenn der elektrische Parameter den Grenzwert nicht überschreitet, wobei der Modus zum vollständigen Vorwärmen Betreiben eines vollständigen Öffnungs- und Schließbereichs der Vorwärmer-Expansionsvorrichtung beinhaltet; und
Betreiben der Vorwärmer-Expansionsvorrichtung (77) in einem Modus zum begrenzten Vorwärmen, wenn der elektrische Parameter den Grenzwert überschreitet, wobei der Modus zum begrenzten Vorwärmen Beschränken eines Öffnungs- und Schließbereichs der Vorwärmer-Expansionsvorrichtung (77) beinhaltet.

2. Transportkältesystem (10) nach einem der vorhergehenden Ansprüche, das ferner Folgendes umfasst:
eine zweite Verdampfer-Expansionsvorrichtung (150) stromabwärts des ersten Kältemittelflusspfads (71);
einen zweiten Verdampfer (50), der einen Einlass, der an die zweite Verdampfer-Expansionsvorrichtung (150) gekoppelt ist, und einen Auslass, der an den Verdichtereinlasspfad gekoppelt ist, aufweist, wobei der zweite Verdampfer (50) zum Kühlen einer zweiten Kammer (114) des Behälters ist.

## Revendications

1. Système frigorifique de transport (10) comprenant :
un compresseur (20) présentant un orifice d'aspiration, un orifice de refoulement et un orifice d'entrée intermédiaire situé à un emplacement intermédiaire le long d'un trajet de compression entre l'orifice d'aspiration du compresseur et l'orifice de refoulement du compresseur ;
un échangeur thermique à rejet de chaleur (116) en aval de l'orifice de refoulement du compresseur et comportant un ventilateur d'échangeur thermique à rejet de chaleur ;
un échangeur thermique d'économiseur (148) étant traversé par un premier trajet d'écoulement de fluide frigorigène (71) et un second trajet d'écoulement de fluide frigorigène (72) ;
un dispositif d'expansion d'évaporateur (140) en aval du premier trajet d'écoulement de fluide frigorigène (71) ;
un évaporateur (40) comportant un ventilateur d'évaporateur et présentant une entrée couplée au dispositif d'expansion d'évaporateur (140) et une sortie couplée à un trajet d'entrée du compresseur, le trajet d'entrée du compresseur étant couplé à l'orifice d'aspiration du compresseur, l'évaporateur étant destiné à refroidir un compartiment (112) d'un contenant ;
un dispositif d'expansion d'économiseur (77) couplé au premier trajet d'écoulement du fluide frigorigène (71), le dispositif d'expansion d'économiseur (77) dirigeant le fluide frigorigène du premier trajet d'écoulement de fluide frigorigène (71) au second trajet d'écoulement de fluide frigorigène (72), le second trajet d'écoulement de fluide frigorigène (72) étant couplé à l'orifice d'entrée intermédiaire ;
un générateur (21) ;
un réchauffeur ; et
un dispositif de commande (550) conçu pour commander le dispositif d'expansion d'économiseur (77) pour réguler le flux de fluide frigorigène le long du second trajet d'écoulement de fluide frigorigène (72) vers l'orifice d'entrée intermédiaire, **caractérisé en ce que** le dispositif de commande (550) est conçu pour commander le dispositif d'expansion d'économiseur (77) en réponse à un paramètre électrique du système frigorifique (10) ;
dans lequel le paramètre électrique du système frigorifique (10) comporte l'un ou plusieurs d'un courant de sortie du générateur, une tension de sortie du générateur, un tirage de courant du compresseur, une tension d'entrée au niveau du compresseur, un tirage de courant du ventilateur d'échangeur thermique à rejet de chaleur, une tension d'entrée au niveau du ventilateur d'échangeur thermique à rejet de chaleur, un tirage de courant du ventilateur d'évaporateur, une tension d'entrée au niveau du ventilateur d'évaporateur, un tirage de courant du réchauffeur et une tension d'entrée au niveau du réchauffeur,
dans lequel le système frigorifique de transport (10) comporte un capteur de tension et/ou de courant conçu pour mesurer le paramètre électrique, et
dans lequel :
la commande du dispositif d'expansion d'économiseur (77) en réponse au paramètre électrique du système frigorifique comporte :
la mesure du paramètre électrique à l'aide du capteur de tension et/ou de courant ;
la comparaison du paramètre électrique à une limite ;
le fonctionnement du dispositif d'expansion d'économiseur (77) dans un mode économique complet lorsque le paramètre électrique ne dépasse pas la limite, dans lequel le mode économisé complet comporte le fonctionnement d'une plage d'ouverture et de fermeture complète du dispositif d'expansion d'économiseur ; et
le fonctionnement du dispositif d'expansion d'économiseur (77) dans un mode économique limité lorsque le paramètre électrique dépasse la limite, dans lequel le mode économisé limité comporte la restriction d'une plage d'ouverture et de fermeture du dispositif d'expansion d'économiseur (77) ;

2. Système frigorifique de transport (10) selon une quelconque revendication précédente comprenant en outre :
un second dispositif d'expansion d'évaporateur (150) en aval du premier trajet d'écoulement de fluide frigorigène (71) ;
un second évaporateur (50) présentant une entrée couplée au second dispositif d'expansion d'évaporateur (150) et une sortie couplée à un trajet d'entrée du compresseur, le second évaporateur (50) étant destiné à refroidir un second compartiment (114) du contenant ;
